# EUROPÄISCHE PATENTSCHRIFT

(11) **EP 2 087 996 B1**
(45) Veröffentlichungstag und Bekanntmachung des Hinweises auf die Patenterteilung: **19.10.2011**
(21) Anmeldenummer: 08105957.8
(22) Anmeldetag: 09.12.2008
(51) Int. Cl.: B41F 13/14, B41F 13/24, B41F 13/34, B41F 19/02, B41F 33/00, G01L 5/00, B41F 19/06, B41F 1/54

(54) **Stellvorrichtung für Folientransfer**
Positioning device for heating cycle valves
Dispositif de réglage pour transfert de feuilles

(30) Priorität: 01.02.2008 DE 102008007380
(43) Veröffentlichungstag der Anmeldung: 12.08.2009
(73) Patentinhaber: Heidelberger Druckmaschinen Aktiengesellschaft, 69115 Heidelberg (DE)
(72) Erfinder: Franzen, Peter, 69434 Hirschhorn (DE); Klockmann, Nils, 69469 Weinheim (DE); Weber, Alexander, 69469 Weinheim (DE)

(56) Entgegenhaltungen:
- EP-A- 1 493 565
- WO-A-2005/049322
- DE-A1-102007 009 884
- DE-U1- 9 104 151
- US-A- 5 562 027
- US-A- 5 735 994

## Beschreibung

Die vorliegende Erfindung betrifft Verfahren zum Übertragen einer Transferschicht von einer Trägerfolie, die zusammen eine Transferfolie bilden, auf einen Bedruckstoff. Der Bedruckstoff wird in einem Auftragswerk zumindest bereichsweise mit Kleber beaufschlagt und anschließend gemeinsam mit der Transferfolie in einem Transferwerk durch einen Transferspalt, gebildet von aneinander angestellten Transfer- und Gegendruckflächen, geführt. Die Transferschicht wird im Transferspalt unter Einwirkung eines ersten Anpressdruckes im Wesentlichen in den mit Kleber beaufschlagten Bereichen partiell auf den Bedruckstoff übertragen. Der Bedruckstoff wird dann gemeinsam mit der übertragenen Transferschicht wenigstens einem dritten Werk zugeführt, welches wenigstens einen Spalt aufweist, der durch zwei aneinander angestellte Flächen gebildet wird. Der Bedruckstoff mit der Transferschicht wird durch diesen Spalt hindurchgeführt und in diesem Spalt kann ein Anpressdruck auf den Bedruckstoff mit der Transferschicht zumindest ausgeübt werden.

Des Weiteren betrifft die Erfindung eine Folientransfervorrichtung, umfassend ein Auftragswerk zum wenigstens bereichsmäßigen Beaufschlagen eines durch das Auftragswerk hindurchgeführten Bedruckstoffes mit einem Kleber, ein, dem Auftragswerk nachgelagerten Transferwerk mit einem Transferspalt zum wenigstens bereichsmäßigen Übertragen einer Transferschicht von einer Trägerfolie, die zusammen eine Transferfolie bilden auf den Bedruckstoff, und
wenigstens ein drittes Werk mit einem von zwei Flächen gebildeten Spalt zur weiteren Bearbeitung des Bedruckstoffes mit der aufgebrachten Transferschicht.

Außerdem betrifft die Erfindung auch noch eine Aufzugsfläche zum Aufziehen auf einen Zylinder eines Transferwerkes, vorzugsweise in einer Folientransfervorrichtung.

Bevorzugt betrifft die Erfindung eine Vorrichtung, ein Verfahren und eine Aufzugsfläche, die für das so genannte Kaltfolienprägen geeignet sind.

Beim Kaltfolienprägen wird eine Transferschicht von einem Trägermaterial auf einen Bedruckstoff übertragen.

Als Trägermaterial wird eine Trägerfolie verwendet. Auf der Transferschicht kann eine Haftschicht vorgesehen sein, die die Hafteigenschaften der Transferschicht mit einem Kleber auf dem Bedruckstoff verbessert. Die Schichten, die von dem Trägermaterial übertragen werden werden unabhängig von ihrem tatsächlichen Aufbau gemeinsam als Transferschicht bezeichnet.

Zum Übertragen der Transferschicht auf einen Bedruckstoff wird die Transferfolie zusammen mit dem Bedruckstoff durch einen Transferspalt hindurchgeführt. Der Transferspalt wird durch einen Transferzylinder und einen Gegendruckzylinder gebildet, die an einander anliegen. Transferzylinder und Gegendruckzylinder werden rotierend mit einer Anpresskraft aneinander angestellt, dass im Transferspalt die Transferschicht auf den Bedruckstoff übertragen wird.

Damit ein bereichsweiser Übertrag der Transferschicht auf den Bedruckstoff erfolgen kann wird der Bedruckstoff vor dem Folientransfer mit einer Kleberschicht versehen, die dem Bereich entspricht, in dem Folie übertragen werden soll.

Als Kleber kann ein farbloser Kleber, ein Kleber mit einer bestimmten Eigenfarbe oder auch ein entsprechend der Folie eingefärbter Kleber verwendet werden.

Bei der Transferschicht kann es sich im Wesentlichen um eine Metallschicht aber auch um andere Schichten handeln. Z.B. kann eine Aluminiumschicht vorgesehen sein, die je nach Bedarf auf einer gelb/goldenen Lackschicht oder einer silberfarbenen Lackschicht aufgebracht ist.

Des Weiteren kann als Transferschicht auch eine farblose Schicht z.B. aus PE-Folie verwendet werden, die so auf den Bedruckstoff übertragen wird, dass sie dort eine Schutzschicht bildet.

Eine Vorrichtung zum Kaltfolienprägen ist in der EP 0 578 706 B1 vorgestellt. Dokument US-A-5735994 offenbart ein Verfahren und eine Vorrichtung gemäβ dem Oberbegriff von Anspruch 1 und Anspruch 10.

Hierbei findet das Kaltfolienprägen innerhalb einer Mehrfarbendruckmaschine statt. Der Bedruckstoff wird entlang eines vorgegebenen Transportpfades in der Druckmaschine transportiert. Bei dem Bedruckstoff kann es sich beispielsweise um Papierbogen, Pappe, Folie oder auch Rollen bzw. Bahnen handeln.

In einem ersten Druckwerk der Druckmaschine wird auf den Bedruckstoff statt einer Farbe ein Kleber übertragen. Zum bereichsweisen Auftragen des Klebers ist in diesem Druckwerk eine entsprechend bebilderte Druckplatte aufgespannt und der Kleber wird wie eine herkömmliche Offsetdruckfarbe auf den Bedruckstoff übertragen. Solch ein Kleber auftragendes Druckwerk wird als Auftragswerk bezeichnet.

Der Bedruckstoff wird dann weiter in ein zweites Druckwerk transportiert. In diesem zweiten Druckwerk sind der Gegendruckzylinder und der Gummituchzylinder als Teile des Transferwerks ausgebildet, der Gummituchzylinder ist dann der Transferzylinder.

Im Bereich dieses zweiten Druckwerkes befindet sich ein Folienmodul mit einer Transferfolienvorratswelle und einer Transferfoliensammelwelle. Über Zwischenrollen einer Folienführungseinrichtung wird die Folie als Transferfolienbahn von der Transferfolienvorratswelle zum Transferspalt und weiter zur Transferfoliensammelwelle geführt. Die Transferfolienbahn kann auch kürzer als Folienbahn bezeichnet werden.

Zum Transfer der Transferschicht auf den Bedruckstoff werden die Transferfolienbahn und der Bedruckstoff mit derbereichsweisen Kleberschicht gemeinsam entlang ihrer jeweiligen Transportpfade so durch den Transferspalt hindurchgefiihrt, dass die Transferschicht auf der Kleberschicht aufliegt. Mit einem Anpressdruck wird dann im Transferspalt die Transferschicht auf den Bedruckstoff übertragen. Durch den Kleber wird die Transferschicht dann von der Transferfolie abgenommen.

In einem folgenden Presswerk wird auf die übertragene Transferschicht eingewirkt, so dass eine Dauerhaftigkeit der Folienauflage erreicht wird.

Aus der DE 1 02006015474A-1 ist es bekannt, dass die Folientransfervorrichtung eine herkömmliche Offsetdruckmaschine sein kann, z.B. eine Vierfarbenmaschine. Bei dem Transferwerk und bei den nachfolgenden Werken kann es sich um Weiterverarbeitungswerke der Druckmaschine handeln, insbesondere können hier weitere Druckwerke vorgesehen sein. Als Weiterverarbeitungs- oder Weiterbehandlungswerke der Druckmaschine können auch Lack- Anilox-, Perforier-, Stanz-, Rill-, Schneid- oder Prägewerke vorgesehen sein.

Sowohl in der EP 0 578 706 B1, wie auch in der DE 10 2006 015 474 A1 ist es vorgesehen, dass der Bedruckstoff mit der aufgebrachten Transferschicht nach dem Transferwerk noch weitere Weiterverarbeitungseinrichtungen, d.h. Weiterbehandlungswerke der Druckmaschine durchläuft.

Diese Weiterbehandlungswerke können insbesondere während der Verwendung der Druckmaschine als Folientransfervorrichtung inaktiv gesetzt sein und nur dann wirksam auf den Bedruckstoff einwirken, wenn dieser nicht mit einer Transferschicht beaufschlagt wurde. Das Folientransferwerk kann dann, ebenso wie das Kleber-Auftragswerk als herkömmliches Druckwerk verwendet werden.

Allerdings ist es auch möglich, dass die Weiterbehandlungswerke aktiv während der Nutzung der Druckmaschine als Folientransfervorrichtung verwendet werden.

Der mit der Transferschicht beaufschlagte Bedruckstoff wird dann durch einen Spalt des Weiterbehandlungswerkes hindurchgeführt, In diesem Spalt kann der Bedruckstoff mit der aufgebrachten Transferschicht einem weiteren Anpressdruck ausgesetzt sein. Bei dem Weiterbehandlungswert kann es sich z. B. um ein herkömmliches Druckwerk einer Druckmaschine handeln. Der Spalt ist dann ein Druckspalt dieses Druckwerkes und wird durch den Gummituchzylinder und den an den Gummituchzylinder angestellten Gegendruckzylinder gebildet.

Der Anpressdruck, welcher auf den beschichteten Bedruckstoff einwirkt kann sowohl im Folientransferwerk, als auch im anschließenden Weiterbehandlungswerk variiert werden. Dieser Anpressdruck resultiert dabei aus der Anpresskraft, mit welcher die an dem Spalt beteiligten Flächen aneinander angestellt werden. Im Druckspalt bzw. im Transferspalt sind das der Gummituchzylinder und der Gegendruckzylinder. Die Anpresskraft bzw. der Anpressdruck wird dafür im Allgemeinen durch die Einstellung der Druckbeistellung im Druckwerk bzw. Folientransferwerk variiert.

Die Druckbeistellung ist ein Maß für den Abstand der Achsen der am Spalt beteiligten Zylinder.

Die Druckbeistellung wird in der Einheit Millimeter angegeben. Der Nullpunkt der Druckbeistellung ist durch den Abstand der Achsen des Gummituchzylinders zum Gegendruckzylinder vorgegeben, bei dem die Oberfläche des Gummituchzylinders gerade die Oberfläche des durch den Druck bzw. Transferspalt geführten Bedruckstoffes kontaktiert. Der Nullpunkt der Druckbeistellung ist daher immer in Relation zum verwendeten Bedruckstoff angegeben.

Die Druckbeistellung kann daher in Abhängigkeit vom Bedruckstoff positive und negative Werte annehmen.

Negative Druckbeistellungswerte beschreiben ein Überschneiden der Oberfläche des Transferzylinders bzw. des Gummituchzylinders mit der Oberfläche des Bedruckstoffes, welche entsprechend komprimiert werden.

Positive Werte der Druckbeistellung beschreiben einen Abstand von Gummituch bzw. Transferzylinder zum Gegendruckzylinder, bei dem die Oberfläche des Bedruckstoffes nicht mehr berührt wird.

Herkömmlicherweise wird die Druckbeistellung in zehntel Millimeter angegeben, ist dabei aber in Schritten von 0,01 mm einstellbar. Da für eine gebräuchliche Bearbeitung eines Bedruckstoffes in einem Weiterbehandlungswerk, wie z. B. einem Druckwerk einer Druckmaschine, eine Kontaktierung der Zylinder mit dem Bedruckstoff von beiden Seiten für gewöhnlich gewünscht ist wird im Allgemeinen eine negative Druckbeistellung eingestellt. Es hat sich daher im Allgemeinen Sprachgebrauch auch eingebürgert diese negative Druckbeistellung nur ihrem Betrag nach und ohne negatives Vorzeichen anzugeben.

Durch die variable Druckbeistellungen im Transferwerk und in nachgelagerten Weiterbehandlungswerken kann es zu Qualitätsminderungen des resultierten Druckproduktes kommen.

Im Transferspalt des Transferwerkes wird die Kleberschicht kantengenau mit der Transferschicht abgedeckt. Wird auf den so beschichteten Bedruckstoff in einem nachfolgenden Spalt erneut ein Anpressdruck ausgeübt, so kann es zu einem Herausdrücken der unter der Transferschicht liegenden Kleberschicht kommen. Dieser unter der Transferschicht herausgequetschte Kleber kann dann von einer Fläche des Spaltes des Weiterbehandlungswerkes aufgenommen werden. So kann z. B. das Gummituch eines Gummituchzylinders mit Kleber verunreinigt werden, wodurch zum einen eine zu übertragene Farbe selber verunreinigt wird und zum anderen Kleber mit dem Gummituch wieder Teile der Transferschicht von dem beschichten Bogen ablösen kann.

Die Aufgabe der vorliegenden Erfindung ist es, dieses beschriebene Problem soweit zu lösen, dass die Qualität des erzeugten Druckproduktes verbessert und eine Verunreinigung eines nachfolgenden Weiterverarbeitungswerkes durch Kleber wenigstens verringert wird.

Diese Aufgabe der Erfindung wird durch eine gattungsgemäße Folientransfervorrichtung einer mit dieser zusammenwirkenden Aufzugsfläche zum Aufziehen auf einen Zylinder eines Transferwerkes und einem entsprechenden Verfahren gemäß der oben genannten Gattung gelöst.

Bei dem erfindungsgemäßen Verfahren werden die Anpressdrücke im Transfer- und im dritten Werk über die Einstellungen der den Spalt bildenden Flächen variiert. Hierbei ist zu berücksichtigen, dass der Transferspalt im Transferwerk im Allgemeinen durch einen Transferzylinder z. B. ein Gummituchzylinder und einen Gegendruckzylinder gebildet wird und der Spalt im dritten Werk der Spalt eines entsprechenden Weiterbehandlungswerkes ist. Dieser Spalt kann zum einen durch zwei ebene Flächen gebildet werden, die aneinander gedrückt werden. Es kann auch sein, dass ein Zylinder gegen eine ebene Fläche gepresst wird oder dass zwei Zylinder aneinander gepresst werden. Handelt es sich beim dritten Werk beispielsweise um ein Druckwerk, so handelt es sich bei den aneinandergestellten Flächen die den Spalt bilden um einen Gummituchzylinder und einen Gegendruckzylinder die gemeinsam den Druckspalt bilden.

Wird im Folgenden von einem Druckwerk, Druckspalt gesprochen, so soll alle spaltbildenden Flächen umfasst sein.

Weiterhin sollen die Anpressdrücke im Transfer- und dritten Werk über die Druckbeistellung variierbar sein. Wie beschrieben gibt die Druckbeistellung an, wie weit die Oberfläche eines Zylinders in einen verwendeten Bedruckstoff"hineintaucht". Diese Druckbeistellung ist dabei erfindungsgemäß variierbar.

Um zu verhindern, dass Kleber durch eine zu hohe Krafteinwirkung auf die Kleberschicht herausgepresst wird, ist es weiterhin vorgesehen, dass wenigstens eine der möglichen Messgrößen Anpressdruck, Druckbeistellung und Anpresskraft der Flächen im Transfer-und/oder dem wenigstens einem dritten Werk erkannt wird und in Abhängigkeit hiervon wenigstens eine der Regelgrößen im Transfer- und/oder dritten Werk geregelt wird. Durch diese erfindungsgemäße Regelung kann die Kraft, die auf die Kleberschicht im Transfer und im dritten Werk einwirkt erfindungsgemäß so geregelt werden, dass kein Kleber mehr unter einer Transferschicht herausgepresst werden kann. Als Regelgrößen gelten die Größen, die prinzipiell so regelbar sind, dass sie den Anpressdruck in einem Spalt wenigstens beeinflussen können. Besonders bevorzugt sind hier die Regelgrößen Druckbeistellung und Anpresskraft. Die Druckbeistellung wurde bereits beschrieben und die Anstellkraft ist die Kraft, mit der die am Spalt beteiligten Flächen aneinander angestellt sind. Es spielt dabei keine Rolle, ob nur eine Fläche oder beide hierfür beweglich ausgebildet sind.

Zur Lösung der Aufgabe ist vorrichtungsmäßig eine gattungsgemäße Folientransfervorrichtung vorgesehen, die wenigstens eine Stellvorrichtung zum Einstellen wenigstens einer der oben beschriebenen Regelgrößen Anpresskraft und Druckbeistellung im Transferspalt des Transferwerkes und/oder im Spalt des dritten Werkes in Abhängigkeit von einer der erkannten Messgrößen aus der Menge Anpressdruck, Anpresskraft und Druckbeistellung in den Spalten bereitgestellt wird.

Erfindungsgemäß ist es vorteilhafterweise vorgesehen, dass einer oder mehrere der Messwerte im Transferwerk mit dem entsprechenden Wert im dritten Werk verglichen wird. Aus diesem Vergleich der unterschiedlichen Messgrößen wird ein Maß gebildet, welches einen Hinweis auf den Unterschied der Messgrößen in den verschiedenen Werken gibt. Aufgrund dieses Unterschiedes kann dann wenigstens eine Regelgröße in den Werken nachgeregelt werden um die Menge des herausgequetschten Klebers zumindest zu verringern.

Erfindungsgemäß weist die Folientransfervornchtung dafür eine Stellvorrichtung auf, welche wenigstens eine Erfassungseinrichtung zum Erkennen wenigstens einer der Messgrößen Anpressdruck, Anpresskraft und Druckbeistellung im Transferspalt des Transferwerkes und im Spalt des wenigstens einen dritten Werkes umfasst.

Des weiteren ist es vorgesehen, dass die Stellvorrichtung mit einer Auswerteeinrichtung zur Auswertung der erkannten Messgrößen und eine Regeleinrichtung zur Regelung einer der Regelgrößen Anpresskraft und Druckbeistellung im Transferspalt des Transferwerkes und/oder Spalt des dritten Werkes in Abhängigkeit von wenigstens einer der erkannten Messgrößen umfasst.

Erfindungsgemäß kann dieses Maß, welches den Unterschied zwischen den erkannten Werten im Transferwerk und dritten Werk angibt, durch die Differenz oder den Quotienten der erkannten Werte gebildet werden. Hierfür ist erfindungsgemäß dann eine Auswerteeinrichtung mit wenigstens einem Quotienten- und/oder Differenzenbildungsorgan zur Bestimmung eines Quotienten bzw. einer Differenz der erkannten Messgrößen vorgesehen.

Um zu verhindern, dass in einem dem Transferwerk nachgelagerten dritten Werk Kleber unter der Transferschicht herausgequetscht wird ist es vorgesehen, dass der Anpressdruck, welcher im nachfolgenden dritten Werk auf dem Bedruckstoff mit dem Kleber und der Transferschicht einwirkt den Anpressdruck, welcher im Transferwerk auf den Bedruckstoff einwirkt nicht wesentlich übersteigt. Hierfür ist es erfindungsgemäß vorgesehen, dass die Druckbeistellung oder die Anpresskraft der am Spalt beteiligten Flächen, so variiert wird, dass der Anpressdruck, die Anpresskraft oder die Druckbeistellung im dritten Werk den entsprechenden Wert im Transferwerk nicht wesentlich übersteigt.

Durch den Anpressdruck, welcher im Transferwerk auf den Kleber und die Transferschicht einwirkt wird die Kleberschicht bereits hier maximal auseinandergepresst. Der Kleber ist allerdings in seiner gesamten flächigen Ausdehnung mit der Transferschicht der Transferfolie in Kontakt. Auf diese Weise wird auch der auseinandergequetschte Kleber gesamtflächig und kantenscharf mit der Transferschicht verbunden und übernimmt diese Transferschicht von der Transferfolie. Es kommt hierbei also nicht zu unter der Transferschicht herausgepressten Kleber.

Wirkt in einem dritten Werk kein erhöhter Anpressdruck mehr auf die Kleberschicht, die diese stärker verbreitern würde als sie es ohnehin schon durch den Anpressdruck im Transferspalt würde, so kann kein Kleber in diesem Werk nach außen gepresst werden.

Es wurde festgestellt, dass der Anpressdruck welcher im Transferwerk auf die Transferschicht und den aufgetragenen Kleber einwirkt noch durch die Trägerfolie welche ausschließlich im Transferwerk und nicht im anschließenden dritten Werk vorhanden ist noch verstärkt wird. Hierdurch sind vorteilhafterweise Abweichungen in der Einstellung der maximalen Unterschiede zwischen den wirkenden Kräften bzw. Druckbeistellungen im Transfer und anschließenden dritten Werk in Grenzen tolerierbar.

In einer erfindungsgemäß vorteilhaften Weiterentwicklung ist es vorgesehen, dass einer oder mehrere der Messgrößen Anpressdruck, Anpresskraft und Druckbeistellung sowohl im Transferwerk, als auch in dem wenigstens einen dritten Werk erkannt wird. Weiterhin soll aus den erkannten Werten bestimmt werden ob einer dieser Messgrößen oder mehrere im dritten Werk höher ist, als der entsprechende Wert im Transferwerk. Sollte dieses der Fall sein, so ist es erfindungsgemäß vorgesehen, dass, um ein erhöhtes Anpressen des Klebers im dritten Werk und damit das Herausquetschen des Klebers dadurch zu vermeiden, dass dann die Druckbeistellung und/oder die Anpresskraft als Regelgröße im dritten Werk reduziert wird.

Im Regelfall kann vorgesehen sein, dass die Regelgröße, die verändert werden soll auch der Messgröße entspricht, es kann aber auch vorgesehen sein, dass die Regelgröße von der Messgröße abweicht, dies ist insbesondere der Fall, wenn als Messgröße der Anpressdruck gemessen wird und als Regelgröße z.B. die Druckbeistellung fungiert.

In einer alternativen Ausführungsform ist es vorgesehen, dass, den gleichen Fall gegeben, die Druckbeistellung oder die Anpresskraft im Transferwerk erhöht wird.

Insbesondere kann es jeweils vorgesehen sein, dass die Druckbeistellung oder direkt die Anpresskraft im dritten Werk soweit reduziert wird, dass sie geringer oder gleich dem entsprechenden Wert im Transferwerk ist oder dass die Druckbeistellung bzw. die Anpresskraft im Transferwerk so erhöht ist, dass sie hier immer gleich oder höher ist als in einem anschließenden dritten Werk.

Ebenso gut ist es auch möglich, dass gleichzeitig die Druckbeistellung oder die Anpresskraft im dritten Werk reduziert wird, während die Druckbeistellung oder die Anpresskraft im Transferwerk erhöht wird und dieses so aufeinander abgestellt ist, dass vom Effekt her die Anpresskraft bzw. Druckbeistellung im Transferwerk nicht niedriger ist als diejenige im anschließenden dritten Werk.

Um eine möglichst genaue Regelung einer der Regelgrößen Anpresskraft oder Druckbeistellung zu gewährleisten ist es weiter vorgesehen, dass der Anpressdruck zwischen den Flächen im Spalt von einem Sensor in einer der Flächen erkannt wird. Auf diese Weise kann die Regelung der Anpresskräfte oder der Druckbeistellung im Transfer-und/oder anschließenden dritten Werk so vorgenommen werden, dass der Unterschied der Anpressdrücke im Transferwerk und im Spalt des dritten Werkes zu Gunsten des Anpressdrucks im Transferwerk variiert wird oder umgekehrt.

Erfindungsgemäß soll die Folientransfervorrichtung dafür so ausgestaltet sein, dass in einer spaltbildenden Oberfläche wenigstens ein Drucksensor integriert sein soll. Mit Hilfe dieses Sensors kann dann eine entsprechende Analyse der tatsächlich vorherrschenden Anpressdrücke erfolgen und eine Auswertung durch die Auswerteeinrichtung vorgenommen werden, welche mit einer Erfassungseinrichtung zum Erfassen der Messgröße verbunden ist. Und durch die die Auswerteeinrichtung umfassende Stellvorrichtung können die entsprechenden Druckbeistellungen und/oder Anpresskräfte in den Werken so geregelt werden, dass der tatsächlich wirkende Druck zwischen den Flächen des Spaltes im Transferwerk nie niedriger ist als der entsprechende Druck im nachfolgenden Dritten Werk.

In einer erfindungsgemäßen Weiterbildung der Folientransfervorrichtung ist vorgesehen, dass zur einfacheren Wartung des Drucksensors und zur Gewährleistung seiner Funktion die den Sensor umfassenden Fläche durch einen auswechselbaren Aufzug gebildet ist. Die Fläche kann bevorzugt ein Drucktuch des Transferzylinders oder ein Gummituch eines folgenden Druckwerkes sein.

Zur Vereinfachung der Auswerteeinrichtung ist es vorgesehen, dass der erkannte Anpressdruck vom Sensor mittels eines kabellosen Übertragungsverfahrens an ein außerhalb des Spaltes bereitgestellten Empfänger zur Weitergabe an eine Auswerteeinrichtung übergeben wird. Hierdurch kann vorteilhafterweise auf Schleifkontakte oder eine im Bereich des Spaltes bereitgestellte Auswerteeinrichtung verzichtet werden.

Alternativ ist es auch möglich, dass die Anpresskraft der Flächen aneinander per Kraftmessung im Bereich eines oder mehrerer Lager wenigstens einer der aneinandergestellten Flächen ermittelt wird. Dieses gilt sowohl für die Flächen des Transferspaltes, als auch für die Flächen des Spaltes im anschließenden dritten Werk. Auf diese Weise kann zur Regelung die im Transferwerk und im anschließenden dritten Werk die tatsächlich gemessene Anpresskraft verwendet werden. Die Einstellung kann dann so erfolgen, dass die Unterschiede der Anpresskräfte in den Werken verringert bzw. aufgehoben werden. Auch kann die erkannten Werte der Anpresskraft als Messgröße genutzt werden und durch eine Regelung der Regelgröße Anpresskraft und/oder Druckbeistellung kann die Differenz der Anpresskräfte optimiert werden, so dass die Anpresskraft im Transferwerk nicht niedriger ist als in einem nachfolgenden Werk.

Vorrichtungsmäßig ist es wie beschrieben vorgesehen, dass der Drucksensor ein Sendeorgan umfassen soll, welches berührungslos die vom Drucksensor ermittelten Größen an eine Empfangseinheit sendet und die mit der Auswerteeinrichtung wenigstens verbunden ist.

Erfindungsgemäß wird eine besonders große Flexibilität der Folientransfervorrichtung dadurch erreicht, dass es sich sowohl beim Auftragswerk, beim Transferwerk und auch beim anschließenden dritten Werk oder weiteren anschließenden dritten Werken jeweils um Druckwerke einer herkömmlichen Offsetdruckmaschine handeln kann.

Außerdem wird die Aufgabe der Erfindung durch eine Aufzugsfläche zum Aufziehen auf einen Zylinder gelöst, die einen in ihr integrierten Drucksensor zum Erkennen des auf die Aufzugsfläche wirkenden Druckes aufweist. Bei dem Zylinder kann es sich z. B. um einen Transferzylinder eines Transferwerkes oder um einen entsprechenden Gegendruckzylinder handeln oder es kann sich um einen Gummituchzylinder eines Druckwerkes handeln. Es sollen auch Aufzugsflächen umfasst werden, welche auf ebene Flächen aufgebracht werden.

Zusätzlich zum integrierten Drucksensor ist es erfindungsgemäß auch vorgesehen, dass die Aufzugsfläche einen in ihr integrierten Sender zum berührungslosen Übermitteln des vom Drucksensor erkannten Druckes an eine Empfangseinrichtung aufweist.

Insbesondere sollen Verfahrensschritte umfasst sein, bei denen Differenzen der Messgrößen als Grenzwerte vorgegeben sind, die nicht überschritten, bzw. auf die die Regelgrößen eingeregelt werden sollen. Es kann dabei auch ein Wert für die Differenz der Messgrößen vorgegeben sein, der immer erhalten bleiben soll, die Regelgrößen müssen dann nach dieser Vorgabe geregelt werden.

Ausführungsbeispiele der Erfindung auf welche sie allerdings nicht beschränkt sein soll und aus denen sich auch zusätzliche erfindungsgemäße Merkmale ergeben können sind in den folgenden Zeichnungen dargestellt.

Es zeigen:
- Figur 1: Ein Schaubild zur Veranschaulichung der Druckbeistellung
- Figur 2: Einen Teil einer Folientransfervorrichtung
- Figur 3a: Einen Teil eines Bogens mit übertragener Transferschicht
- Figur 3b: Den Bogen mit Transferschicht unter erhöhtem Anpressdruck
- Figur 4: Ein Schaubild zur Veranschaulichung einer Stellvorrichtung einer Folientransfervorrichtung
- Figur 5: Ein Gummituch mit Drucksensor.

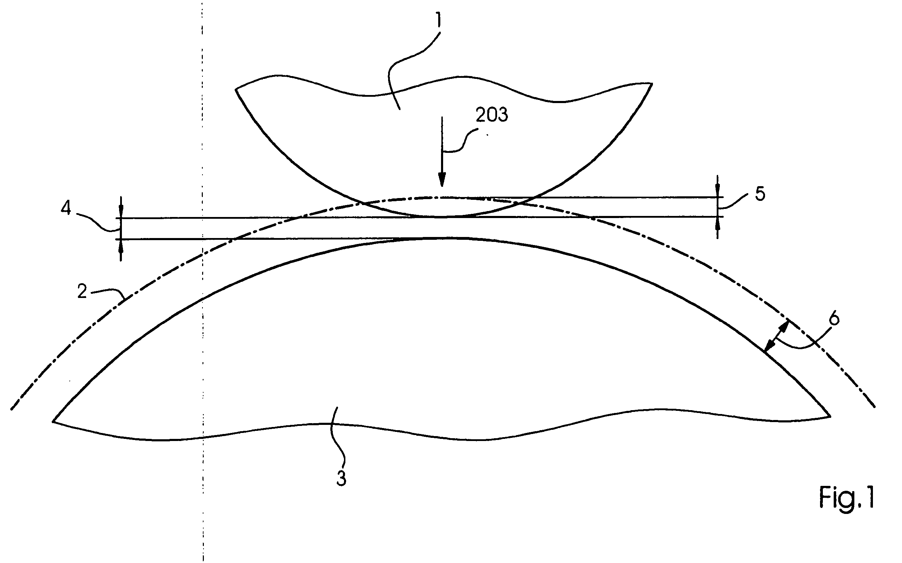

Die Figur 1 zeigt ein Schaubild zur Veranschaulichung der Druckbeistellung 5 in einem Druckspalt 4.

Der Druckspalt 4 eines Druckwerkes 103 oder eines Transferwerkes 102 oder Auftragswerkes 101 wird gebildet durch einen Gummituchzylinder 1 und einen Gegendruckzylinder 3. Der Gegendruckzylinder 3 führt dabei einen Bogen 2 durch das entsprechende Werk hindurch und damit auch durch den Druckspalt 4. Im Druckspalt 4 wird auf den Bogen 2 ein Anpressdruck 203 ausgeübt. Dieser Anpressdruck 203 auf dem Bogen 2 resultiert aus einer Überlappung der Oberfläche des Gummituchzylinders 1 mit der Oberfläche des Bogen 2.

Im hier dargestellten Fall weist der Bogen 2 eine Bogendicke 6 auf, die größer ist als der Druckspalt 4. Somit kommt es wie dargestellt zu einer Überlappung zwischen dem Bedruckstoff 2 und dem Gummituchzylinder 1. Der Betrag dieser Überlappung wird mit der Druckbeistellung 5 gekennzeichnet und erfasst. Ist die Bogendicke 6 größer als der Druckspalt 4, so wird von einer negativen Druckbeistellung 5 geredet. Für gewöhnlich wird das Vorzeichnen allerdings weggelassen und nur von dem Betrag der Druckbeistellung 5 geredet. Die Druckbeistellung 5 ist im Allgemeinen eine einstellbare Regelgröße und stellt gleichzeitig auch eine Messgröße dar, die erkannt werden kann.

Mögliche Druckbeistellungen können vom Betrag her im Bereich zwischen 0,1 mm und 0,3 mm eingestellt werden, gebräuchlich sind Werte zwischen 0,1 mm und 0,15mm.

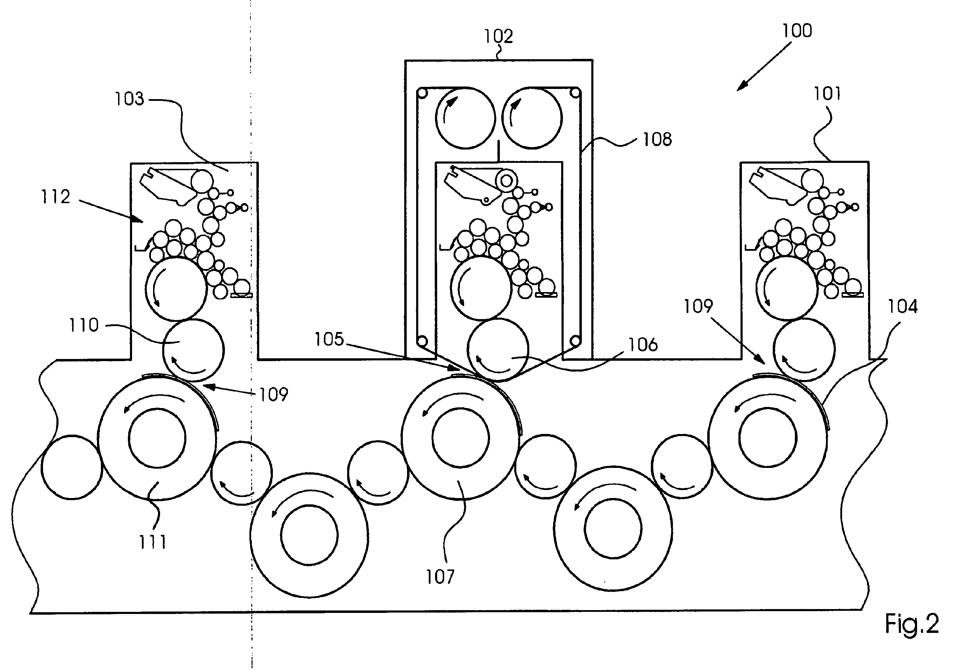

Die Figur 2 zeigt seitlich aufgeschnitten einen Ausschnitt einer Folientransfervorrichtung 100. Die hier dargestellte Folientransfervorrichtung 100 ist dabei ein Umbau einer gewöhnlichen Druckmaschine. Zur besseren Veranschaulichung sind hier nur drei Werke 101, 102, 103 der Folientransfervorrichtung 100 dargestellt. Die Folientransfervorrichtung 100 kann dabei noch weitere Werke, wie z. B. Druckwerke, Nummerierwerke, Presswerke usw. aufweisen. Insbesondere sind Anleger und Ausleger der Folientransfervorrichtung 100 hier nicht dargestellt.

Ein Bogen 104 wird von rechts nach links von einem nicht gezeigten Anleger durch die Folientransfervorrichtung 100 geführt. Zunächst wird der Bogen 104 in einem Auftragswerk 101 mit Kleber beaufschlagt. Der mit Kleber beaufschlagte Bogen 104 wird dann weiter durch die Folientransfervorrichtung geführt, um gemeinsam mit einer Transferfolie 108 durch einen Transferspalt 105 des Transferwerkes 102 hindurchgeführt zu werden.

Der Transferspalt 105 des Transferwerkes 102 wird dabei durch den Transferzylinder 106 und den Gegendruckzylinder 107 gebildet. Bei dem Transferzylinder 106 handelt es sich häufig auch um einen Gummituchzylinder eines herkömmlichen Druckwerkes.

Wie in Figur 1 dargestellt, ist der Transferzylinder 106 und der Gegendruckzylinder 107 so aneinander angestellt, dass unter Berücksichtigung des Bogen 104 eine negative Druckbeistellung 5 vorhanden ist. Auf diese Weise wird eine Transferschicht 201 von der Transferfolie 108 im Transferspalt 105 unter Druckeinwirkung auf den mit Kleber beaufschlagten Bedruckstoff 104 übertragen.

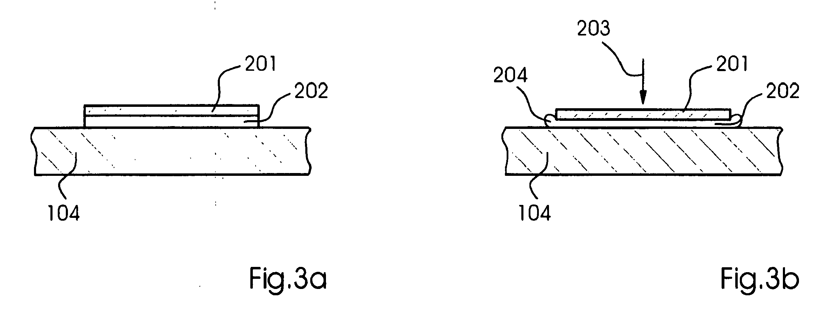

Der Übertrag der Transferschicht 201 erfolgt dabei kantenscharf nur auf den mit Kleberschicht 202 beaufschlagten Bereich des Bogen 104. Dieses ist so in Figur 3a dargestellt.

Der so mit Kleberschicht 202 und Transferschicht 201 beaufschlagte Bogen 104 wird weiter durch die Folientransfervorrichtung 100 hindurchgeführt und einem ersten dritten Werk 103 hinzugeführt. In dem hier dargestellten Fall handelt es sich bei dem dritten Werk um ein Druckwerk 103. Der Bogen 104 wird durch den Druckspalt 109 hindurchgeführt und mit Farbe beaufschlagt. Die Farbe im Druckwerk 103 kann dabei sowohl auf Bereiche übertragen werden, welche eine Transferschicht 201 aufweisen oder nicht. Das Druckwerk 103 umfasst für den Farbauftrag ein Farbwerk 112.

Der Druckspalt 109 wird durch einen Gummituchzylinder 110 und einen Gegendruckzylinder 111 gebildet. Auch hier wird zum Übertragen einer nicht dargestellten Druckfarbe eine negative Druckbeistellung 5 zwischen dem Gegendruckzylinder 111 und dem Gummituchzylinder 110 eingestellt.

Der Bogen 104 wird weiter durch die Folientransfervorrichtung 100 hindurchgeführt und weiteren dritten Werken, welche dem Druckwerk 103 nachgeordnet sind, zugeführt. Alternativ ist es auch möglich, dass der Bogen 104 keinen weiteren dritten Werken zugeführt wird, sondern anschließend gleich gegebenenfalls nach Durchlaufen einer Trocknerstrecke einem nicht dargestellten Ausleger zugeführt wird. Bei den nicht dargestellten weiteren dritten Werken kann es sich auch um Druckwerke, Lackierwerke, Prägewerke, Presswerke, Nummerierwerke, Stanz- oder Perforierwerke oder ähnliches handeln.

Die Figur 3a zeigt schematisch von der Seite einen Bogen 104 nachdem er ein Auftragswerk 101 und ein Transferwerk 102 durchlaufen hat. Im Auftragswerk 101 wurde eine Kleberschicht 202 bereichsweise auf den Bogen 104 übertragen und anschließend wurde eine Transferschicht 201 von der Transferfolie 108 im Transferwerk 102 auf die Kleberschicht 202 aufgetragen. Durch die negative Druckbeistellung 5 im Transferwerk 102 wurde auch im Transferspalt 105 ein Anspressdruck 203 auf den Bogen 104 mit der Kleberschicht 202 ausgeübt. Dadurch wurde die Kleberschicht auseinandergepresst, so dass sie eine größere Fläche einnimmt. Dieses gilt zumindest so lange, wie im Auftragswerk 101 ein niedriger Anpressdruck herrscht als im Transferspalt 105.

Unabhängig von den unterschiedlichen Verhältnissen bezüglich des Druckes im Druckspalt 109 des Auftragswerkes 101 und im Transferspalt 105 des Transferwerkes 102 wird der Kleberschicht 202 im Transferspalt 105 über ihre ganze Fläche eine Transferschicht 201 der Transferfolie 108 angeboten und von dieser im Wesentlichen kantengenau abgenommen. Es bildet sich somit eine relativ kantenscharfe Transferschicht 201, die eine im Wesentlichen gleiche Flächenausdehnung wie die Kleberschicht 202 auf dem Bogen 104 hat.

Wird der Bogen 104 mit der Kleberschicht 202 und der Transferschicht 201 durch ein anschließendes Werk 103 hindurchgeführt und wird hier ein höherer Anpressdruck 203 auf die Transferschicht 201, den Bogen 104 und die Kleberschicht 202 ausgeübt, so wird die Kleberschicht 202 unter der Transferschicht 201 herausgepresst, da sie im Wesentlichen inkompressibel ist und es werden sich neben den Rändern der Transferschicht 201 Quetschränder 204 der Kleberschicht 202 bilden. Diese Quetschränder 204 der Kleberschicht 202 können dann im Druckwerk 103 auf den Gummituchzylinder 110 und damit in das Farbwerk 112 übertragen werden. Durch den Übertrag einer Klebermasse in das Farbwerk 112 kann die Farbe des Druckwerkes 103 verunreinigt werden. Außerdem kann Kleber auf dem Gummituchzylinder 110 dafür sorgen, dass von einem nachfolgenden Bogen 104 die Transferschicht 201 zurück auf den Gummituchzylinder 110 abgezogen werden kann. Auf diese Weise kommt es zum einen zu Verunreinigungen des durch das Druckwerk 103 erzeugten Druckbildes auf dem Bedruckstoff 104 und außerdem zu Zerstörungen an der Transferschicht 201.

Die Bildung dieser Quetschränder 204, hervorgerufen durch einen erhöhten Anpressdruck 203 sind in Figur 3b dargestellt.

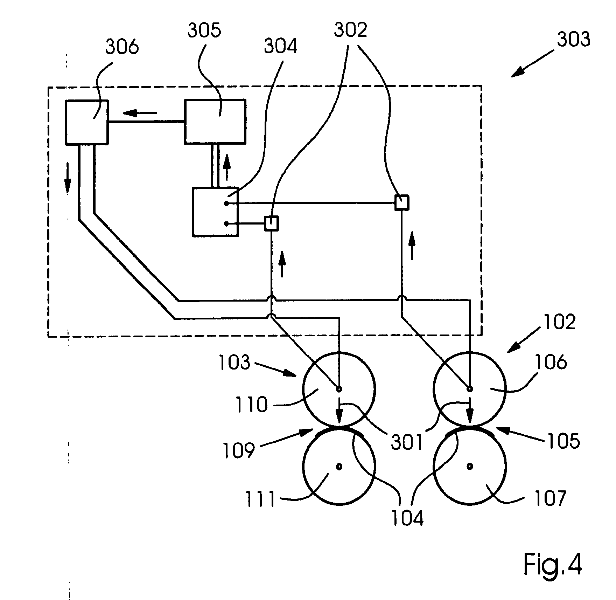

In der Figur 4 ist schematisch eine Stellvorrichtung eines Folientransferwerkes dargestellt, welche die Druckbeistellungen im Transferwerk 102 und in einem nachfolgenden dritten Werk, d. h. im Druckwerk 103 einstellt.

Gleiche Bezugszeichen beschreiben hier gleiche Elemente wie in den vorangegangenen Zeichnungen. Auf die Darstellung nicht an einem Stellvorgang beteiligter Elemente ist hier zur Verdeutlichung verzichtet worden.

Im Transferwerk 102 und im Druckwerk 103 wird auf einen Bogen 104 eine Druckbeistellung 301 bzw. ein entsprechender Anpressdruck ausgeübt. Die Druckbeistellung 301 ist hier eine Messgröße und kann von der Erfassungseinrichtung 302 erkannt werden und wird von dieser zu einer Auswerteeinrichtung 304 weitergeleitet. Spätestens die Auswerteeinrichtung 304 ordnet den erkannten Messgrößen zu vergleichende Größen zu. Diese werden einem Differenzbildungsorgan 305 zugefiihrt, welche das Ergebnis einer Differenzbildung an eine Regelungseinrichtung 306 weitergibt. Je nach Größe und Vorzeichen der gebildeten Differenz im Differenzbildungsorgan 305 regelt die Regelungseinrichtung 306 die Transferzylinder 106 bzw. Gummituchzylinder 110 so, dass sich die Druckbeistellung 301, die nun als Regelgröße fungiert, jeweils in einer Art und Weise ändert, dass eine Druckbeistellung 301 im Folientransferwerk 102 vermieden wird, die niedriger als im Druckwerk 103 wäre. Im Folientransferwerk 102 wird dann nie eine niedrigere Druckbeistellung 301 eingestellt, als im nachfolgenden Druckwerk 103.

In einer ersten Alternative wird
die Druckbeistellung 301 im Folientransferwerk 102 soweit erhöht, dass die Differenz im Differenzbildungsorgan 305 zumindest wieder Null ergibt, oder aber die Druckbeistellung im Folientransferwerk 102 größer ist als die Druckbeistellung 301 im Druckwerk 103.

In einer zweiten Alternative wird
die Druckbeistellung 301 im Druckwerk 103 soweit reduziert, bis im Differenzbildungsorgan 305 erkannt wird, dass die Druckbeistellung 301 im Folientransferwerk 102 wieder gleich oder größer als die Druckbeistellung 301 im Druckwerk 103 ist oder in
einer dritten Alternative wird
die Druckbeistellung 301 im Druckwerk 103 reduziert und gleichzeitig wird die Druckbeistellung 301 im Folientransferwerk 102 erhöht, so dass resultierend die Differenz im Differenzbildungsorgan 305 so gebildet werden kann, dass hier im Folientransferwerk 102 zumindest eine gleichhohe Druckbeistellung 301 oder eine höhere Druckbeistellung 301 als im nachfolgenden Druckwerk 103 vorhanden ist.

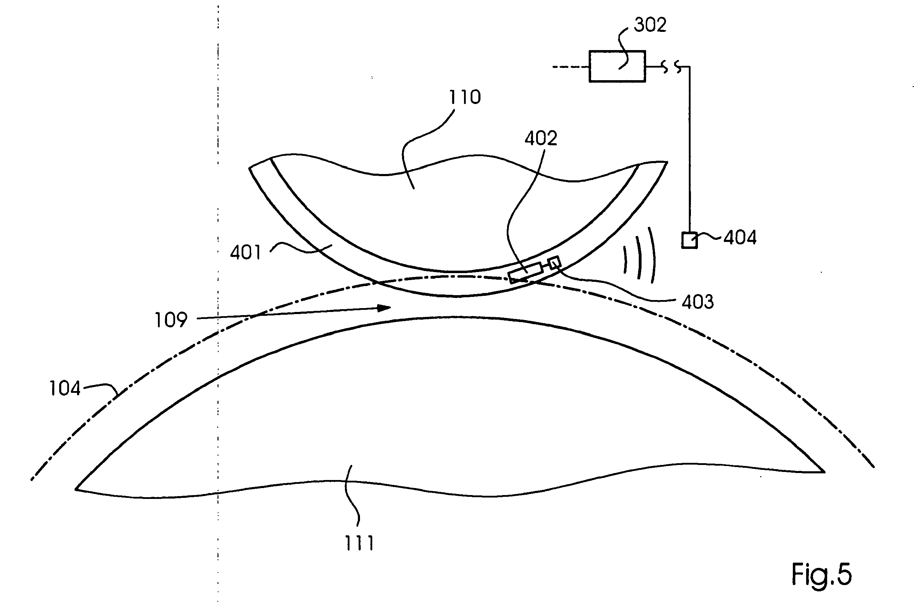

Die Figur 5 zeigt einen Druckspalt 109 wie in Figur 2 für ein Druckwerk 103 dargestellt ist.

Der Druckspalt wird auch hier gebildet von dem Gegendruckzylinder 111 und einem Gummituchzylinder 110. Im Gegensatz zu der vereinfachten Darstellung in Figur 2 ist hier auch der Aufzug, d. h. das Gummituch 401 des Gummituchzylinders 110 dargestellt.

Wie in Figur 4 dargestellt kann die Stelleinrichtung 303 die Druckbeistellung 301 im Transferwerk 102 bzw. in einem anschließenden dritten Werk wie einem Druckwerk 103 in Abhängigkeit von der erkannten Druckbeistellung 301 in den jeweiligen Werken regeln. Eine solche Regelung der Druckbeistellung 301 in den genannten Werken kann alternativ auch direkt in Abhängigkeit von dem gemessenen Druck im Druckspalt 109 eines Druckwerkes 103 bzw. im Transferwerk 105 eines Transferwerkes 102 geregelt werden.

Um nun statt auf die vorhandene Druckbeistellung 301 als Messgröße im Transfer- bzw. Druckwerk 102 bzw. 103 auf den tatsächlich herrschenden Druck zu regeln, ist es in der hier vorgestellten Alternative vorgesehen, dass im aufgezogenen Gummituch 401 ein Drucksensor 402 integriert ist, welcher mit einem Sender 403 verbunden ist. Dieser Sender übermittelt kabellos den gemessenen Druck an eine Empfangseinrichtung 404, welche diesen erkannten Wert weiter an die Erfassungseinrichtung 302 leitet. Die weitere Regelung der Druckbeistellungen 301 (die weiter als Regelgröße fungiert) in den betroffenen Werken erfolgt analog wie in Figur 4 beschrieben mit den auch dort vorgesehenen Vorrichtungen. Statt auf die Differenz der Druckbeistellungen 301 im Transferwerk 102 und Druckwerk 103 zu regeln wird hier direkt auf die Differenz der im Transferspalt 105 bzw. Druckspalt 109 herrschenden Drücke geregelt. Dieses wird durch den dort vorgesehenen Drucksensor 402 ermöglicht.

Übersteigt der Anpressdruck 203 bzw. die Druckbeistellung 301 in einem dem Folientransferwerk 102 nachgelagerten dritten Werk wie z. B. in einem direkt anschließenden Druckwerk 103 den Anpressdruck bzw. die Druckbeistellung 301, welche auf den Bedruckstoff im Transferwerk 102 selber ausgeübt wird, so kann es zu der beschriebenen und in Figur 3b gezeigten Folge kommen, dass die Kleberschicht 202 unter der aufgelegten Transferschicht 201 herausgequetscht wird und es zu Quetschrändem 204 kommt. Dieses hat die bereits oben geschilderten negativen Folgen. Insoweit kann durch die Stellvorrichtung 303 vermieden werden, dass es überhaupt zu einem erhöhten Anpressdruck 203 in einem nachfolgenden dritten Werk gegenüber dem Transferwerk 102 kommt.

Hierfür gibt es zunächst 3 Alternativen, auf welche Messgrößen die Stellvorrichtung 303 regeln kann. Dieses ist in einer ersten Ausführungsform die Druckbeistellung 301, welche sowohl im Transferwerk 102 wie auch in einem nachfolgenden dritten Werk z. B. im anschließenden Druckwerk 103 direkt erkannt wird. Alternativ kann auch direkt auf den gemessenen Druck mittels eines Drucksensors 402 wie in Figur 5 geregelt werden oder die Anpresskraft der Zylinder in den Werken kann als Messgröße verwendet werden.

Wie bereits beschrieben, wird eine Differenz (alternativ ist auch eine Quotientenbildung möglich) gebildet, welche Aufschluss darüber gibt, in welchem Werk, d. h. im Transferwerk 102 oder im Druckwerk 103 ein höherer Anpressdruck 203 oder eine höhere Druckbeistellung 301 vorhanden bzw. eingestellt ist.

Wird hierbei erkannt, dass im Transferwerk 102 d. h. genauer im Transferspalt 105 des Transferwerkes 102 ein höherer Anpressdruck 203 herrscht, als in einem anschließenden Druckwerk 103, so kann auf eine Regulierung der Druckbeistellungen 301 oder der auf die Lager der beteiligten Zylinder wirkende Anpresskräfte verzichtet werden. Es herrschen hier Druckverhältnisse welche nicht geeignet sind die Qualität der übertragenen Transferschicht bzw. des anschließenden Druckes auf die Transferschicht oder den Bedruckstoff 104 zu verschlechtern.

Das gleiche gilt für den Fall, wenn statt auf den Anpressdruck 203 auf die Druckbeistellung 301 oder die Anpresskraft geregelt wird. Wird erkannt, dass die Druckbeistellung 301 im Transferwerk 102 diejenige in einem anschließenden Druckwerk 103 übersteigt, so ist eine Regelung nicht notwendig um die Qualität zu gewährleisten.

Wird erkannt, dass der Anpressdruck 203 oder die Druckbeistellung 301, oder die Anpresskraft als Messgrößen im Transferwerk 102 niedriger ist als der Anpressdruck 203 bzw. die Druckbeistellung 301 oder Anpresskraft in einem anschließenden Druckwerk 103, so kommt es zu einer Regelung durch die Stellvorrichtung 303, so dass ein Zustand wiederhergestellt wird, in dem der Anpressdruck 203 oder die Druckbeistellung 301 oder die Anpresskraft in keinem nachfolgenden dritten Werk wie z. B. in einem nachfolgenden Druckwerk 103 den Anpressdruck 203 bzw. die Druckbeistellung 301 oder die Anpresskraft im Folientransferwerk 102 übersteigt.

Dieser Zustand welcher eingestellt werden soll um die Qualität des Druckproduktes auf einem hohen Niveau zu gewährleisten ist über verschiedene alternative Verfahren erreichbar.

### Alternative la:

Im Transferwerk 102 wird die Druckbeistellung (als Regelgröße) im Transferspalt 105 solange erhöht, bis sie der Druckbeistellung (als Messgröße) im anschließenden Druckwerk 103 wenigstens entspricht.

### Alternative 1b:

Wird nicht auf die Druckbeistellung, sondern auf die gemessenen Anpressdrücke 203 als Messgrößen geregelt, so wird die Druckbeistellung 301 (als Regelgröße) im Folientransferwerk 102 solange erhöht, bis der gemessene Anpressdruck 203 im Transferspalt 105 wenigstens so hoch ist, wie der gemessene Anpressdruck 203 in einem anschließenden Druckspalt 109.

### Alternative 1c:

Es ist alternativ auch möglich, nicht die Anpressdrücke 203 oder die Druckbeistellung 301 zu erkennen und auf diese zu regeln, sondern direkt auf die Anstellkräfte als Messgröße zu regeln, mit welchem z. B. der Gummituchzylinder 110 bzw. der Transferzylinder 106 über seine Achsenlager gegen den Gegendruckzylinder 111 bzw. 107 angepresst wird. Übersteigt dann die Anpresskraft in einem nachfolgenden Druckwerk 103 diejenige im Folientransferwerk 102, so kann die Anpresskraft (nun als Regelgröße) im Transferwerk 102 solange erhöht werden, bis sie wenigstens der Anstellkraft in einem nachfolgenden Druckwerk 103 entspricht.

### Alternative 1d:

Wird auf den gemessenen Anpressdruck 203 geregelt und sind die Anpresskräfte der Gummituchzylinder 110 bzw. Transferzylinder 106 einstellbar und messtechnisch auswertbar, so kann auch direkt die entsprechende Anpresskraft auf den Transferzylinder 106 im Transferwerk 102 solange hochgeregelt werden bis der gemessene Anpressdruck 203 im Transferwerk 102 wenigstens so hoch ist, wie der Anpressdruck 203 in einem anschließenden Druckwerk 103.

### Alternative 2:

Die gleichen Verfahrensschritte wie in den Alternativen 1a bis 1d sind auch insofern denkbar als, dass die Druckbeistellung 301, der Anpressdruck 203 bzw. die Anpresskraft im Transferspalt 105 des Transferwerkes 102 jeweils konstant gehalten wird und jeweils die Druckbeistellung 301 oder die Anstellkraft des Gummituchzylinders 110 als Regelgrößen in einem nachfolgenden Druckwerk 103 soweit reduziert werden, dass es im Ergebnis wieder zu einer Einstellung kommt in der die Druckbeistellung 301, die Anpresskraft oder der Anpressdruck 203 als Messgrößen im Folientransferwerk 102 wenigstens genauso groß sind wie die Druckbeistellung 301, die Anpresskraft bzw. der Anpressdruck 203 in einem nachfolgenden Druckwerk 103.

### Alternative 3:

Zum Erreichen einer wenigstens gleich hohen Druckbeistellung 301, Anpresskraft oder eines wenigstens gleich hohen Anpressdruckes 203 im Folientransferwerk 102 gegenüber einer entsprechenden Druckbeistellung 301, Anpresskraft bzw. Anpressdruck 203 in einem nachfolgenden Druckwerk 103 sind auch Kombinationen aus den Alternativen 1 und 2 insoweit denkbar, dass sowohl jeweils die Druckbeistellungen 301 im Transferwerk 102 und im Druckwerk 103 gleichzeitig variiert werden oder die Anpresskräfte auf den Transferzylinder 106 bzw. den Gummituchzylinder 110 gleichzeitig variiert werden oder in einem der beiden Werke die Druckbeistellung 301 variiert wird während im anderen Werk die Anpresskraft variiert wird, bis sich entweder gleiche Druckbeistellungen 301, gleiche Anpresskräfte oder gleiche Anpressdrücke 203 im Transferwerk 102 und in einem anschließenden Druckwerk 103 ausbilden oder die Druckbeistellung 301, die Anpresskraft bzw. der Anpressdruck 203 im Transferwerk 102 dem entsprechenden Wert in einem nachfolgenden Druckwerk 103 sogar übersteigt.

Allen diesen möglichen Verfahren ist es gemeinsam, dass durch diese Regelung mittels der Stellvorrichtung 303 ein Herausquetschen der Kleberschicht 202 in einem dem Transferwerk 102 nachfolgenden dritten Werk wie z. B. einem nachfolgenden Druckwerk 103 vermieden wird und günstigerweise die Qualität des resultierenden Druckproduktes durch die herausgequetschten Quetschränder 204 der Kleberschicht 202 nicht mehr gemindert wird, zumindest kann die Minderung verringert werden.

### Bezugszeichenliste

- 1: Gummituchzylinder
- 2: Bogen
- 3: Gegendruckzylinder
- 4: Druckspalt
- 5: Bogendicke

- 100: Folientransfervorrichtung
- 101: Auftragswerk
- 102: Transferwerk
- 103: Druckwerk
- 104: Bogen
- 105: Transferspalt
- 106: Transferzylinder
- 107: Gegendruckzylinder
- 108: Transferfolie
- 109: Druckspalt
- 110: Gummituchzylinder
- 111: Gegendruckzylinder
- 112: Farbwerk

- 201: Transferschicht
- 202: Kleberschicht
- 203: Anpressdruck
- 204: Quetschränder

- 301: Druckbeistellung oder Anpressdruck
- 302: Erfassungseinrichtung
- 303: Stellvorrichtung
- 304: Auswerteeinrichtung
- 305: Differenzbildungsorgan
- 306: Regelungseinrichtung

- 401: Gummituch
- 402: Drucksensor
- 403: Sender
- 404: Empfangseinrichtung

## Patentansprüche

1. Verfahren zum Übertragen einer Transferschicht von einer Trägerfolie, die zusammen eine Transferfolie bilden, auf einen Bedruckstoff, wobei
der Bedruckstoff in einem Auftragswerk zumindest bereichsweise mit Kleber beaufschlagt wird,
- der Bedruckstoff gemeinsam mit der Transferfolie in einem Transferwerk durch einen Transferspalt, gebildet von aneinander angestellten Transfer- und Gegendruckflächen, geführt wird,
- die Transferschicht im Transferspalt unter Einwirkung eines ersten Anpressdruckes im Wesentlichen in den mit Kleber beaufschlagten Bereichen partiell auf den Bedruckstoff übertragen wird
- der Bedruckstoff gemeinsam mit der übertragenen Transferschicht wenigstens einem dritten Werk zugeführt wird, welches wenigstens einen Spalt aufweist, der durch zwei aneinander angestellte Flächen gebildet wird,
- der Bedruckstoff mit der Transferschicht durch den Spalt hindurchgeführt wird und in diesem Spalt ein Anpressdruck auf den Bedruckstoff mit der Transferschicht zumindest ausgeübt werden kann,
**dadurch gekennzeichnet, dass**
- die Anpressdrücke im Transfer- und wenigstens einem dritten Werk wenigstens über die Anstellung der den Spalt bildenden Flächen aneinander variierbar ist,
- wenigstens eine Regelgröße aus der Gruppe Anpresskraft und Druckbeistellung im Transferwerk (102) und wenigstens in einem nachfolgenden dritten Werk (103) variierbar ist,
- wenigstens eine aus der Menge der Messgrößen, umfassend den Anpressdruck, die Anpresskraft und die Druckbeistellung im Transferwerk (102) erkannt wird,
- wenigstens eine aus der Menge der Messgrößen, umfassend den Anpressdruck, die Anpresskraft und die Druckbeistellung im dritten Werk (103) erkannt wird, und
- in Abhängigkeit von den erkannten Messgrößen wenigstens eine Regelgröße in wenigstens einem der Werke Transferwerk (102) und nachfolgendem dritten Werk (103) so geregelt wird, dass Unterschieden der in den Werken erkannten Messgröße entgegengewirkt wird,
wozu die gleichen Messgrößen im Transferwerk (102) und im dritten Werk (103) erkannt und verglichen und ein Wert als Maß für den jeweiligen Unterschied gebildet wird, wobei
als Maß für wenigstens eine unterschiedliche Messgröße jeweils die Differenz oder der Quotient der erkannten Werte gebildet wird.

2. Verfahren nach Anspruch 1,
**dadurch gekennzeichnet, dass**
als Regelgrößen wenigstens eine der Größen Druckbeistellung und Anpresskraft im Transfer- und/oder dritten Werk so variiert werden, dass wenigstens eine Messgröße im dritten Werk (103) die entsprechende Messgröße im Transferwerk (102) nicht wesentlich übersteigt.

3. Verfahren nach Anspruch 2,
**dadurch gekennzeichnet, dass**
- wenigstens eine Messgröße im Transfer-(102) und im wenigstens einen dritten Werk (103)erkannt wird,
- die Differenz der Messgrößen gebildet wird,
- bestimmt wird, ob die Messgröße im dritten Werk (103) höher ist als die im Transferwerk (102), und,
- wenn sie höher ist und/oder einen Grenzwert überschreitet, wenigstens eine der Regelgrößen Druckbeistellung und Anpresskraft im dritten Werk reduziert wird.

4. Verfahren nach Anspruch 2,
**dadurch gekennzeichnet, dass**
- wenigstens eine Messgröße im Transfer-(102) und im wenigstens einen dritten Werk (103)erkannt wird,
- die Differenz der Messgrößen gebildet wird,
- bestimmt wird, ob die Messgröße im dritten Werk (103) höher ist als der im Transferwerk (102), und,
- wenn sie größer ist und/oder einen Grenzwert überschreitet, wenigstens eine der Regelgrößen Druckbeistellung und Anpresskraft im Transferwerk erhöht wird.

5. Verfahren nach Anspruch 2
**dadurch gekennzeichnet, dass**
- wenigstens eine Messgröße im Transfer-(102) und im wenigstens einen dritten Werk (103)erkannt wird,
- die Differenz der Messgrößen gebildet wird,
- bestimmt wird, ob die Messgröße im dritten Werk (103) größer ist als im Transferwerk (102), und,
- wenn sie größer ist und/oder einen Grenzwert überschreitet, wenigstens eine der Regelgrößen Druckbeistellung und Anpresskraft im dritten Werk reduziert und im Transferwerk erhöht wird.

6. Verfahren nach einem der Ansprüche 3 bis 5,
**dadurch gekennzeichnet, dass**
eine Erhöhung/ eine Reduktion so durchgeführt wird, dass wenigstens eine der Messgrößen Druckbeistellung und Anpresskraft im Transferwerk (102) nicht niedriger als diejenige in einem nachfolgenden dritten Werk (103) ist.

7. Verfahren nach einem der Ansprüche 3 bis 5,
**dadurch gekennzeichnet, dass**
als Messgröße der Anpressdruck zwischen den Flächen (106, 107, 110,111) im Spalt (105, 109) von einem Sensor (402)in einer der Flächen (106, 107, 110,111) erkannt wird.

8. Verfahren nach Anspruch 7,
**dadurch gekennzeichnet, dass**
der erkannte Anpressdruck vom Sensor (402) mittels eines kabellosen Übertragungsverfahren an einen außerhalb des Spaltes (105, 109) bereitgestellten Empfänger (404) zur Weitergabe an eine Auswerteeinreichtung (304) übergeben wird.

9. Verfahren nach einem der Ansprüche 3 bis 5,
**dadurch gekennzeichnet, dass**
als Messgröße die Anpresskraft der Flächen aneinander per Kraftmessung im Bereich eines Lagers wenigstens einer der aneinander gestellten Flächen (106, 107, 110,111) ermittelt wird.

10. Folientransfervorrichtung, umfassend
ein Auftragswerk (101) zum wenigstens bereichsmäßigen Beaufschlagen eines durch das Auftragswerk (101) hindurchgeführten Hedruckstoffes (104) mit einem Kleber (202), ein, dem Auftragswerk (101) nachgelagerten Transferwerk (102) mit einem Transferspalt (105) zum wenigstens bereichsmäßigen Übertragen einer Transferschicht (201) von einer Trägerfolie, die zusammen eine Transferfolie (108) bilden auf den Bedruckstoff (104), wenigstens ein drittes Werk (103) mit einem von zwei Flächen (110,111) gebildeten Spalt (109) zur weiteren Bearbeitung des Bedruckstoffes (104) mit der aufgebrachten Transferschicht (108), vorzugsweise zur Durchführung eines Verfahrens nach wenigstens einem der vorigen Ansprüche,
**dadurch gekennzeichnet, dass**
wenigstens eine Stellvorrichtung (303) zum Einstellen wenigstens einer der Regelgrößen Anpresskraft und Druckbeistellung im Transferspalt (105) des Transferwerkes (102) und/oder Spalt (109) des dritten Werkes (103) in Abhängigkeit von wenigstens einer erkannten Messgrößen aus der Menge Anpreßdruck, AnpresskraR und Druckbeistellung in den beiden Spalten (105, 109), umfasst ist.

11. Folientransfervorrichtung nach Anspruch 10,
**dadurch gekennzeichnet, dass**
die Stellvorrichtung (303) wenigstens eine Erfassungseinrichung (302) zum Erkennen wenigstens einer der Messgrößen Anpressdruck, Anpresskraft und Druckbeistellung im Transferspalt (105) des Transferwerkes (102) und im Spalt (109) des wenigstens einen dritten Werkes (103) umfasst.

12. Folientransfervorrichtung nach Anspruch 11,
**dadurch gekennzeichnet, dass**
die Stellvorrichtung (303) eine Auswerteeinrichtung (304) zur Auswertung der erkannten Messgrößen, und eine Regeleinrichtung (306) zur Regelung wenigstens einer der Regelgrößen Anpresskraft und Druckbeistellung im Transferspalt (105) des Transferwerkes (102) und/oder Spalt (109) des dritten Werkes (103) in Abhängigkeit von wenigstens einer der erkannten Messgrößen umfasst.

13. Folientransfervorrichtung nach Anspruch 12,
**dadurch gekennzeichnet, dass**
die Auswerteeinrichtung (304) wenigstens ein Quotienten- und/oder Differenzenbildungsorgan (305) zur Bestimmung eines Quotienten, bzw. der Differenz der im Spalt (109) des dritten Werkes (103) und im Transferspalt (105) erkannten Messgrößen aufweist.

14. Folientransfervorrichtung nach Anspruch 10 und 11,
**dadurch gekennzeichnet, dass**
der Transferspalt (105) und/oder der Spalt (109) im dritten Werk (103) eine Fläche (401) mit einem integrierten Drucksensor (402) aufweist, welcher zur Datenübergabe mit einer Erfassungseinrichtung verbunden ist.

15. Folientransfervorrichtung nach Anspruch 14,
**dadurch gekennzeichnet, dass**
die Transferoberfläche und/oder die Oberfläche einer Fläche (401) des Spaltes (109) des dritten Werkes durch eine auswechselbaren Aufzug gebildet, ist.

16. Folientransfervorrichtung nach Anspruch 14,
**dadurch gekennzeichnet, dass**
der Drucksensor (402) ein Sendeorgan (403) umfasst, welches berührungslos die vom Drucksensor (402) ermittelten Stellgrößen an eine Empfangseinheit (404) sendet, die mit der Auswerteeinrichtung (304) wenigstens verbunden ist.

## Claims

1. Method of transferring a transfer layer from a carrier foil, which together form a transfer foil, onto a printing material, wherein glue is applied at least to sections of the printing material in an application unit,
- the printing material together with the transfer foil is guided through a transfer nip formed by transfer and counterpressure surfaces engaged with each other in a transfer unit,
- the transfer layer is partially transferred to the printing material under the effect of a first contact pressure in essentially those areas to which glue is applied,
- the printing material together with the transferred transfer layer is fed at least to a third unit which includes at least one nip formed by two surfaces engaged with each other,
- the printing material with the transfer layer is guided through the nip and in this nip a contact pressure can at least be applied to the printing material with the transfer layer,
**characterized by** the fact that
- the contact pressures in the transfer unit and in at least one third unit are variable at least via the mutual engagement of the surfaces forming the nip,
- at least one control variable out of the set comprising contact force and engagement pressure in the transfer unit (102) and at least in a following third unit (103) is variable,
- at least one measured variable of the set of measured variables comprising contact pressure, contact force, and engagement pressure in the transfer unit (102) is detected,
- at least one measured variable of the set of measured variables comprising contact pressure, contact force and engagement pressure in the third unit (103) is detected, and
- as a function of the detected measured variables, at least one control variable in at least one of the units of transfer unit (102) and following third unit (103) is controlled such that differences in the measured variable detected in the units are counteracted,
for which purpose the same measured variables are detected in the transfer unit (102) and in the third unit (103) and are compared to form a value as a measure of the respective difference, wherein
the difference or ratio of the detected values is formed as the measure for at least one differing measured variable.

2. Method according to Claim 1,
**characterized by** the fact that
as control variables, at least one of the variables of engagement pressure and contact force in the transfer and/or third unit are varied such that at least one measured variable in the third unit (103) does not substantially exceed the corresponding measured variable in the transfer unit (102).

3. Method according to Claim 2,
**characterized by** the fact that
- at least one measured variable is detected in the transfer unit (102) and in the at least one third unit (103),
- the difference of the measured variables is formed,
- an evaluation is made to find out whether the measured variable in the third unit (103) is higher than in the transfer unit (102), and
- if it is higher and/or exceeds a limit, at least one of the control variables of engagement pressure and contact force is reduced in the third unit.

4. Method according to Claim 2,
**characterized by** the fact that
- at least one measured variable is detected in the transfer unit (102) and in the at least one third unit (103),
- the difference of the measured variables is formed,
- an evaluation is made to find out whether the measured variable in the third unit (103) is higher than in the transfer unit (102), and,
- if it is higher and/or exceeds a limit, at least one of the control variables of engagement pressure and contact force is increased in the transfer unit.

5. Method according to Claim 2,
**characterized by** the fact that
- at least one measured variable is detected in the transfer unit (102) and in the at least one third unit (103),
- the difference of the measured variables is formed,
- an evaluation is made to find out whether the measured variable in the third unit (103) is higher than in the transfer unit (102), and,
- if it is higher and/or exceeds a limit, at least one of the control variables of engagement pressure and contact force is reduced in the third unit and increased in the transfer unit.

6. Method according to one of Claims 3 to 5,
**characterized by** the fact that
an increase/a reduction is carried out such that at least one of the measured variables of engagement pressure and contact force in the transfer unit (102) is not lower than that in a following third unit (103).

7. Method according to one of Claims 3 to 5,
**characterized by** the fact that
the contact pressure between the surfaces (106, 107, 110, 111) in the nip (105, 109) is detected as the measured variable by a sensor (402) in one of the surfaces (106, 107, 110, 111).

8. Method according to Claim 7,
**characterized by** the fact that
the detected contact pressure is transmitted by means of a wireless transmission method to a receiver (404) provided outside the nip (105, 109) for the purpose of feeding it to an evaluation unit (304).

9. Method according to one of Claims 3 to 5,
**characterized by** the fact that
the contact force of the surfaces against each other is detected as the measured variable by a force measurement in the region of a bearing of at least one of the surfaces (106, 107, 110, 111) that are engaged with each other.

10. Foil transfer device comprising
an application unit (101) for applying a glue (202) at least to sections of a printing material (104) guided through the application unit (101), a transfer unit (102) located downstream of the application unit (101) and including a transfer nip (105) for at least sectionally transferring a transfer layer (201) from a carrier foil, which together form a transfer foil (108), to the printing material (104), at least one third unit (103) including a nip (109) formed by two surfaces (110, 111) for the further processing of the printing material (104) with the applied transfer layer (108), preferably for implementing a method according to at least one of the preceding claims,
**characterized by** the fact that
at least one adjustment device (303) is provided for adjusting at least one of the control values of contact force and engagement pressure in the transfer nip (105) of the transfer unit (102) and/or nip (109) of the third unit (103) as a function of at least one detected measured variable of the set of variables of contact pressure, contact force, and engagement pressure in the two nips (105, 109).

11. Foil transfer device according to Claim 10,
**characterized by** the fact that
the adjustment device (303) comprises at least one detection device (302) for detecting at least one of the measured variables of contact pressure, contact force and engagement pressure in the transfer nip (105) of the transfer unit (102) and in the nip (109) of the at least one third unit (103).

12. Foil transfer unit according to Claim 11,
**characterized by** the fact that
the adjustment device (303) comprises an evaluation device (304) for evaluating the detected measured variables and a control device (306) for the closed-loop control of at least one of the control variables of contact force and engagement pressure in the transfer nip (105) of the transfer unit (102) and/or in the nip (109) of the third unit (103) as a function of at least one of the detected measured variables.

13. Foil transfer device according to Claim 12,
**characterized by** the fact that
the evaluation device (304) includes at least one ratio and/or difference calculation element (305) for calculating a ratio or difference between the measured variables detected in the nip (109) of the third unit (103) and in the transfer nip (105).

14. Foil transfer device according to Claims 10 and 11,
**characterized by** the fact that
the transfer nip (105) and/or the nip (109) in the third unit (103) includes a surface (401) having an integrated pressure sensor (402) which is connected to a recording device for the purpose of transmitting data.

15. Foil transfer device according to Claim 14,
**characterized by** the fact that
the transfer surface and/or the surface of an area (401) of the nip (109) of the third unit is formed by an exchangeable cover.

16. Foil transfer device according to Claim 14,
**characterized by** the fact that
the pressure sensor (402) comprises a transmitting element (403) for transmitting the actuating variables detected by the pressure sensor (402) to a receiving unit (404) in a touch-free way, the receiving unit (404) being at least connected to the evaluation device (304).

## Revendications

1. Procédé pour le transfert d'une couche de transfert d'une feuille support, lesquelles forment ensemble une feuille de transfert, sur un support imprimé, support imprimé sur lequel un outil d'application dépose une colle au moins par zone,
- le support imprimé étant guidé ensemble avec la feuille de transfert dans un outil de transfert par une fente de transfert, formée par des surfaces de transfert et de contre pression placées côte-à-côte,
- la couche de transfert étant transférée dans la fente de transfert sous l'action d'une première pression d'application essentiellement dans les zones recouvertes de colle partiellement sur le support imprimé,
- la matière imprimée est amenée ensemble avec la couche de transfert transférée au moins à un troisième outil qui présente au moins une fente qui est formée par deux surfaces placées côte-à-côte,
- le support imprimé étant guidé avec la couche de transfert à travers la fente et dans cette fente, une pression d'application avec la couche de transfert peut être au moins exercée sur le support imprimé,
**caractérisé en ce que**
- les pressions d'application sont variables les unes par rapport aux autres dans l'outil de transfert et au moins un troisième outil au moins par le placement côte à côte des surfaces formant la fente,
- au moins une grandeur de réglage du groupe constitué par la pression d'application et la mise en pression est variable dans l'outil de transfert (102) et au moins dans un troisième outil suivant (103),
- au moins une grandeur de mesure parmi le groupe comprenant la pression d'application, la force d'application et la mise en pression est détectée dans l'outil de transfert (102),
- au moins une grandeur de mesure parmi le groupe comprenant la pression d'application, la force d'application et la mise en pression est détectée dans le troisième outil (103), et
- en fonction des grandeurs de mesure détectées, au moins une grandeur de réglage est réglée dan au moins l'un des outils outil de transfert (102) et dans le troisième outil suivant (103) de sorte que des différences des grandeurs de mesure détectées dans les outils sont compensées,
pour ce faire, les mêmes grandeurs de mesure sont détectées et comparées dans l'outil de transfert (102) et dans le troisième outil (103) et une valeur est formée en tant que mesure pour la différence respective,
une différence ou le quotient des valeurs détectées étant formés en tant que mesure pour au moins une grandeur de mesure différente.

2. Procédé selon la revendication 1, **caractérisé en ce qu'**en tant que grandeur de réglage, au moins une des grandeurs, mise en pression et force d'application, varie dans l'outil de transfert et/ou au moins le troisième outil de sorte qu'au moins une grandeur de mesure ne dépasse pas sensiblement dans le troisième outil (103) la valeur de mesure correspondante dans l'outil de transfert (102).

3. Procédé selon la revendication 2,
**caractérisé en ce qu'**
- au moins une grandeur de mesure est détectée dans l'outil de transfert (102) et dans au moins un troisième outil (103),
- la différence des grandeurs de mesure est formée,
- il est défini si la grandeur de mesure dans le troisième outil (103) est supérieure à celle dans l'outil de transfert (102) et
- si elle est supérieure et/ou dépasse une valeur limite au moins une des grandeurs de réglage mise en pression et force d'application est réduite dans le troisième outil.

4. Procédé selon la revendication 2, **caractérisé en ce qu'**
- au moins une grandeur de mesure est détectée dans l'outil de transfert (102) et au moins dans un troisième outil (103),
- la différence des grandeurs de mesure est formée,
- il est défini si la valeur de mesure dans le troisième outil (103) est supérieure à celle dans l'outil de transfert (102)
et
- si elle est supérieure et/ou dépasse une valeur limite au moins une des grandeurs de réglage mise en pression et force d'application est réduite dans l'outil de transfert.

5. Procédé selon la revendication 2, **caractérisé en ce que**
- au moins une grandeur de mesure est détectée dans l'outil de transfert (102) et au moins dans un troisième outil (103),
- la différence des grandeurs de mesure est formée,
- il est défini si la valeur de mesure dans le troisième outil (103) est supérieure à celle dans l'outil de transfert (102)
et
- si elle est supérieure et/ou dépasse une valeur limite au moins une des grandeurs de réglage, la mise en pression et la pression d'application, est réduite dans le troisième outil et est augmentée dans l'outil de transfert.

6. Procédé selon l'une des revendications 3 à 5, **caractérisé en ce que** qu'une augmentation / une réduction est effectuée de sorte qu'au moins une des grandeurs de mesure, la mise en pression et la force d'application, ne soit pas inférieure dans l'outil de transfert (102) que celle dans le troisième outil suivant (103).

7. Procédé selon l'une des revendications 3 à 5, **caractérisé en ce que** la pression d'application entre les fentes (106, 107, 110, 111) est détectée dans la fente (105, 109) par un capteur (402) dans l'une des surfaces (106, 107, 110, 111).

8. Procédé selon la revendication 7, **caractérisé en ce que** la pression d'application détectée par le capteur (402) est transmise au moyen d'un procédé de transmission sans fil à un récepteur (404) placé à l'extérieur de la fente (105, 109) pour la transmettre à un dispositif d'analyse (304).

9. Procédé selon l'une des revendications 3 à 5, **caractérisé en ce que** la force d'application des surfaces côte-à-côte est déterminée en tant que grandeur de mesure par mesure de force dans la zone d'un palier d'au moins l'une des surfaces placées côte-à-côte (106, 107, 110, 111).

10. Dispositif de transfert de feuille, comprenant un outil de dépose (101) pour l'application au moins par zone d'une colle (202) sur un support imprimé (104) traversant l'outil de dépose (101), un outil de transfert (102) logé en aval de l'outil de dépose (101) avec une fente de transfert (105) pour le transfert au moins par zone d'une couche de transfert (201) depuis une feuille de transfert formant ensemble une feuille de transfert (108) sur le substrat imprimé (104), au moins un troisième outil (103) avec une fente (109) formée par deux surfaces (110, 111) pour le traitement ultérieur de support imprimé (104) avec la couche de transfert (108) appliquée de préférence pour la mise en oeuvre d'un procédé selon au moins l'une des revendications précédentes,
**caractérisé en ce qu'**il comprend au moins un dispositif de réglage (303) pour le réglage d'au moins une des grandeurs de réglage, la force d'application et la mise en pression, dans la fente de transfert (105) de l'outil de transfert (102) et/ou dans la fente (109) du troisième outil (103) en fonction d'au moins une grandeur de mesure connue parmi la pression d'application, la force d'application et la mise en pression dans les deux fentes (105, 109).

11. Dispositif de transfert de feuille selon la revendication 10, **caractérisé en ce que** le dispositif de réglage (303) comprend au moins un dispositif de détection (302) pour détecter au moins une des grandeurs de mesure, la pression d'application, la force d'application et la mise en pression, dans la fente de transfert (105) de l'outil de transfert (102) et dans la fente (109) d'au moins un troisième outil (103).

12. Dispositif de transfert de feuille selon la revendication 11, **caractérisé en ce que** le dispositif de réglage (303) comprend un dispositif d'analyse (304) pour l'analyse des grandeurs de mesure détectées et un dispositif de réglage (306) pour le réglage d'au moins l'une des grandeurs de réglage, la force d'application et la mise en pression, dans la fente de transfert (105) de l'outil de transfert (102) et/ou dans la fente (109) du troisième outil (103) en fonction d'au moins l'une des grandeurs de mesure détectées.

13. Dispositif de transfert de feuille selon la revendication 12, **caractérisé en ce que** le dispositif d'analyse (304) présente au moins un organe de formation de quotient et/ou de différence (305) pour la détermination d'un quotient respectivement de la différence des grandeurs de mesure détectées dans la fente (109) du troisième outil (103) et dans la fente de transfert (105).

14. Dispositif de transfert de feuille selon les revendications 10 et 11, **caractérisé en ce que** la fente de transfert (105) et/ou la fente (109) présente dans le troisième outil une surface (401) avec un capteur de pression intégré (402) qui est relié au dispositif de saisie pour la transmission de données.

15. Dispositif de transfert de feuille selon la revendication 14, **caractérisé en ce que** la surface de transfert et/ou la surface supérieure d'une surface (401) de la fente (109) du troisième outil est formée par un élévateur interchangeable.

16. Dispositif de transfert de feuille selon la revendication 14, **caractérisé en ce que** le capteur de pression (402) comprend un organe d'émission (403) qui envoie sans contact les grandeurs de réglage déterminées par le capteur de pression (402) à une unité de réception (404) qui est reliée au moins au dispositif d'analyse (304).
